# EUROPÄISCHE PATENTSCHRIFT

(11) **EP 0 527 145 B1**
(45) Veröffentlichungstag und Bekanntmachung des Hinweises auf die Patenterteilung: **24.07.1996**
(21) Anmeldenummer: 91907388.2
(22) Anmeldetag: 05.04.1991
(51) Int. Cl.: B60L 11/08

(54) **ELEKTROFAHRZEUG MIT EINZELN GESTEUERTEN ANTRIEBS-ELEKTROMOTOREN**
ELECTRIC VEHICLE WITH INDIVIDUALLY CONTROLLED DRIVE ELECTROMOTORS
VEHICULE ELECTRIQUE A ELECTROMOTEURS D'ENTRAINEMENT A COMMANDE INDIVIDUELLE

(30) Priorität: 06.04.1990 DE 4011291
(43) Veröffentlichungstag der Anmeldung: 17.02.1993
(73) Patentinhaber: MAGNET-MOTOR GESELLSCHAFT FÜR MAGNETMOTORISCHE TECHNIK MBH, D-82319 Starnberg (DE)
(72) Erfinder: HEIDELBERG, Götz, D-8136 Starnberg-Percha (DE); GRÜNDL, Andreas, D-8000 München 70 (DE); EHRHART, Peter, D-8000 München 70 (DE)
(74) Vertreter: Klunker . Schmitt-Nilson . Hirsch
(86) Internationale Anmeldenummer: EP9100656
(87) Internationale Veröffentlichungsnummer: WO9115378

(56) Entgegenhaltungen:
- EP-A- 0 046 997
- EP-A- 0 221 729
- DE-A- 3 725 620
- FR-A- 2 592 342
- GB-A- 2 135 478
- US-A- 4 363 999

## Beschreibung

Gegenstand der Erfindung ist, erstens, ein nichtschienengebundenes Fahrzeug mit folgenden Merkmalen:
(a) mindestens zwei Antriebs-Elektromotoren, von denen der eine zum Antrieb eines Antriebsrads auf der linken Fahrzeugseite und der andere zum Antrieb eines Antriebsrads auf der rechten Fahrzeugseite vorgesehen ist;
(b) jedem der beiden Elektromotoren ist eine eigene Motorsteuerung zum Vorgeben der momentanen Soll-Leistung und/oder der momentanen Soll-Drehzahl des betreffenden Elektromotors zugeordnet;
(c) eine mit den Motorsteuerungen verbundene, übergeordnete Zentralsteuerung, welche die beiden Elektromotoren über die Motorsteuerungen im Sinn einer Antriebsschlupfverhinderung und/oder einer Bremsblockierverhinderung und/oder eines fahrdynamisch günstigen Rechts/Links-Antriebsunterschieds steuert;
(d) wobei die Zentralsteuerung und/oder die Motorsteuerungen Informationen über die momentane elektrische Ist-Leistung und die momentane Ist-Drehzahl der beiden Elektromotoren berücksichtigen.

Bei herkömmlichen Elektrofahrzeugen gab der Fahrer über eine Motorsteuerung die gerade gewünschte Antriebsleistung vor. Bei dem erfindungsgemäßen Fahrzeug wird hingegen der momentane Betriebszustand der beiden Elektromotoren berücksichtigt und wird der eigentlichen Motorsteuerung eine Zentralsteuerung überlagert, die übergeordnete, fahrdynamische Gesichtspunkte einbringt, insbesondere Antriebsschlupfverhinderung (im Sinne der Verhinderung von erheblichem Antriebsschlupf), Bremsblockierverhinderung (im Fall der Bremsung des Fahrzeugs mittels der jetzt generatorisch arbeitenden Elektromotoren), Rechts/Links-Antriebsunterschied und dergleichen. Die Motorsteuerung und/oder die Zentralsteuerung erhalten laufend Information über die momentane Spannung, Stromstärke und Drehzahl und errechnen sich daraus die momentane Leistung und das momentane Drehmoment des betreffenden Elektromotors.

Aus dem Dokument FR-A-2 592 342 ist ein elektrisch angetriebenes Straßenfahrzeug bekannt, das für jedes der vier Antriebsräder einen Antriebs-Elektromotor mit einer zugeordneten, elektronischen Motorsteuerung aufweist. Ferner ist eine mit den Motorsteuerungen verbundene, übergeordnete Zentralsteuerung vorgesehen. Mittels der Zentralsteuerung und der Motorsteuerungen werden die Elektromotoren so betrieben, daß die Antriebsräder nicht durchdrehen, daß beim Bremsen mittels der Elektromotoren die Räder nicht blockieren und daß bei Kurvenfahrt die Antriebsräder der beiden Fahrzeugseiten einen Drehzahlunterschied haben (elektronisches Differential). Der Fahrer des Fahrzeugs kann eine konstant einzuhaltende Fahrgeschwindigkeit vorgeben.

Im Unterschied zu diesem bekannten Fahrzeug sind bei dem erfindungsgemäßen Fahrzeug die Zentralsteuerung und/oder die Motorsteuerungen so ausgebildet, daß sie Informationen nicht nur über die momentane Ist-Drehzahl der mindestens zwei Antriebs-Elektromotoren, sondern auch über deren momentane elektrische Ist-Leistung berücksichtigen. Ferner kann ein fahrdynamisch günstiger Rechts-/Links-Antriebsunterschied erzeugt werden, insbesondere für Kurvenfahrt ein höheres Drehmoment am kurvenäußeren Rad oder bei ungewollten Gier- oder Schleuderbewegungen des Fahrzeugs entgegenwirkende Drehmomentunterschiede zwischen der rechten und der linken Fahrzeugseite.

Vorzugsweise weist das erfindungsgemäße Fahrzeug einen Verbrennungsmotor und einen von diesem antreibbaren Stromgenerator auf, wie aus dem Dokument FR-A 2 592 342 bekannt.

Gegenstand der Erfindung ist, zweitens, ein nichtschienengebundenes Fahrzeug, mit folgenden Merkmalen:
(a) mindestens ein Antriebs-Elektromotor;
(b) ein Verbrennungsmotor und ein von dem Verbrennungsmotor antreibbarer Stromgenerator;
(c) dem Elektromotor ist eine eigene Motorsteuerung zum Vorgeben der momentanen Soll-Leistung und/oder der momentanen Soll-Drehzahl des Elektromotors zugeordnet;
(d) der Verbrennungsmotor/Generator-Gruppe ist eine Stromerzeugungssteuerung zugeordnet; und
(e) eine mit den Motorsteuerungen sowie der Stromerzeugungssteuerung verbundene Zentralsteuerung, die unter Berücksichtigung der elektrischen Leistungsanforderung des Elektromotors über die Stromerzeugungssteuerung den Verbrennungsmotor im Sinne eines geringen Kraftstoffverbrauchs und/oder geringer Emissionen und/oder hoher Leistungsabgabe steuert.

Bei herkömmlichen, brennkraftelektrischen Fahrzeugen wurde der Antriebs-Elektromotor durch Vorgabe des Fahrers über eine Motorsteuerung in seiner Leistung gesteuert. Der Verbrennungsmotor, der letztlich die für die Erzeugung der benötigten elektrischen Energie erforderliche Leistung bereitstellen muß, wurde entsprechend der Leistungsanforderung des Antriebs-Elektromotors in seiner Drehzahl geändert. Bei dem erfindungsgemäßen Fahrzeug erfolgt hingegen die jeweils momentan erforderliche Stromerzeugung derart, daß der Verbrennungsmotor in einen unter übergeordneten Gesichtspunkten günstigen Betriebszustand gebracht wird, insbesondere hinsichtlich optimiertem Kraftstoffverbrauch, hinsichtlich optimal niedriger Schadstoffemissionen, hinsichtlich hoher Leistungsabgabe oder dergleichen. Konkret erfolgt die Stromerzeugungssteuerung beispielsweise so, daß die erforderliche Verbrennungsmotorleistung bei einer Drehzahl/Drehmoment-Kombination erzeugt wird, die dem Optimalpunkt des Verbrauchskennfelds des Verbrennungsmotors möglichst nahe ist. Analoges gilt für das Optimum an Schadstoffemission und das Optimum an Leistungsabgabe. Die Stromerzeugungssteuerung kann nur dem Verbrennungsmotor oder sowohl dem Verbrennungsmotor als auch dem Stromgenerator zugeordnet sein.

Aus dem Dokument FR-A-2 592 342 ist ein elektrisch angetriebenes Straßenfahrzeug bekannt, das einen Verbrennungsmotor, einen von diesem antreibbaren Stromgenerator und für jedes der vier Antriebsräder einen Antriebs-Elektromotor mit einer zugeordneten, elektronischen Motorsteuerung aufweist. Ferner ist eine mit den Motorsteuerungen, dem Generator und dem Verbrennungsmotor verbundene Zentralsteuerung vorgesehen. Das Fahrzeug weist einen Stromspeicher auf, und der Verbrennungsmotor rotiert - wenn er zum Laden des Stromspeichers in Betrieb ist - mit seiner hinsichtlich Kraftstoffverbrauch und Schadstoffemission optimalen Drehzahl.

Man kann davon ausgehen, daß der Verbrennungsmotor des bekannten Fahrzeugs durch die Zentralsteuerung gestartet wird, sobald Ladebedarf des Stromspeichers besteht, und stillgesetzt wird, sobald der Stromspeicher einen hinreichenden Ladezustand hat. Infolgedessen stellt sich das bei dem erfindungsgemäßen Fahrzeug gelöste Problem der laufenden Anpassung der Stromerzeugung an die elektrischen Leistungsanforderungen des mindestens einen Antriebs-Elektromotors nicht.

Vorzugsweise weist das Fahrzeug gemäß dem zweiten Aspekt der Erfindung, wie das Fahrzeug gemäß dem eingangs beschriebenen ersten Aspekt der Erfindung, mindestens zwei Antriebs-Elektromotoren auf, von denen der eine zum Antrieb eines Antriebsrads auf der linken Fahrzeugseite und der andere zum Antrieb eines Antriebsrads auf der rechten Fahrzeugseite vorgesehen ist, wobei jedem der beiden Elektromotoren eine eigene Motorsteuerung zugeordnet ist und die Zentralsteuerung die elektrische Leistungsanforderung der beiden Elektromotoren berücksichtigt.

Es wird darauf hingewiesen, daß der beschriebene erste Aspekt der Erfindung und der beschriebene zweite Aspekt der Erfindung auch miteinander kombiniert verwirklicht sein können. In diesem Fall kann eine Zentralsteuerung vorgesehen sein, welche die Funktionen der beiden beschriebenen Zentralsteuerungen miteinander vereinigt.

Wenn vorstehend von Soll-Leistung, Soll-Drehzahl, Ist-Leistung und Ist-Drehzahl gesprochen worden ist, dann versteht sich, daß hierin indirekt eine Aussage über Soll-Drehmoment bzw. Ist-Drehmoment liegt, da die Gleichung Leistung=Drehmoment x Drehzahl gilt.

Das erfindungsgemäße Fahrzeug kann für jedes Fahrzeugrad einen eigenen Antriebs-Elektromotor aufweisen, wobei als typischstes Beispiel ein vierradgetriebenes Fahrzeug genannt wird.

Vorzugsweise werden alle mit einem Elektromotor gekoppelten Fahrzeugräder bei der in der Anmeldung beschriebenen Verhinderung übermäßigen Antriebsschlupfs und/oder Bremsblockierverhinderung berücksichtigt, wobei sich ein Unterschied in der Steuerung der vorderen und der hinteren Räder ergeben kann. Bei dem geschilderten, "fahrdynamisch günstigen Antriebsunterschied" werden alle angetriebenen Fahrzeugräder der gleichen Fahrzeugseite vorzugsweise im wesentlichen analog gesteuert. Es ist jedoch auch eine Ausführung möglich, bei der - ggf. ohne rechts/links-Unterschied - Elektromotoren für vordere angetriebene Räder anders gesteuert werden als Elektromotoren für hintere angetriebene Räder. Dies gilt ganz besonders für die weiter unten beschriebene Möglichkeit der Steuerung auf maximale Traktion bei kontrolliertem Schlupf.

Vorzugsweise ist die Zentralsteuerung so ausgebildet, daß sie zur Antriebsschlupfverhinderung und/oder zur Bremsblockierverhinderung auf eine abnormal hohe oder niedrige Drehzahl mindestens eines der beiden Elektromotoren und/oder auf eine abnormale Drehzahländerung mindestens eines der beiden Elektromotoren und/oder auf einen abnormalen Drehzahlunterschied der beiden Elektromotoren reagiert. Im Fall von mehr als zwei Elektromotoren kann die Zentralsteuerung auf einen abnormalen Drehzahlunterschied zwischen der Drehzahl eines Elektromotors und der (gemittelten) Drehzahl der anderen Elektromotoren reagieren. Auf die genannten Arten erfaßt die Zentralsteuerung ein beginnendes Antriebsdurchdrehen und/oder ein beginnendes Bremsblockieren mindestens eines Fahrzeugrads.

Vorzugsweise ist die Zentralsteuerung so ausgebildet, daß sie über die Motorsteuerungen die beiden Elektromotoren auf im wesentlichen gleiche Drehzahl oder auf Nichtüberschreiten einer vorgegebenen, maximalen Drehzahldifferenz steuert. Hierdurch entsteht ein Effekt wie bei einem mechanischen Sperrdifferential, gegebenenfalls wie bei einem Sperrdifferential mit unter 100% liegender Sperrwirkung. Auch ein mechanisches Sperrdifferential mit unter 100% liegender Sperrwirkung greift erst dann sperrend ein, wenn eine vorgegebene Drehzahl- oder Drehmomentdifferenz zwischen den beiden zugeordneten Antriebsrädern überschritten wird.

Eine weitere bevorzugte Möglichkeit besteht darin, daß die Motorsteuerung und/oder die Zentralsteuerung aus Informationen über die momentane Spannung, Stromstärke und Drehzahl die momentane Leistung, d.h. aufgenommene Leistung oder - nach Wirkungsgradkorrektur - abgegebene Leistung, des betreffenden Elektromotors sowie die für die (Dreh-)Beschleunigung des betreffenden Antriebsstrangs (Rotor des Elektromotors, ggf. Gelenkwelle, ggf. Getriebe, Antriebsrad) verbrauchte Leistung z.B. aufgrund der zeitlichen Änderung der Elektromotordrehzahl errechnet. Die Differenz stellt die betreffende Antriebsradleistung dar. Wenn man die Antriebsradleistungen mit der erzielten Fahrzeugbeschleunigung oder Fahrzeuggeschwindigkeit vergleicht, kann man die Elektromotoren so steuern, daß sich eine optimale Umsetzung der Leistung der Antriebsräder in Fahrzeugvortrieb ergibt. Fahrzeugbeschleunigung oder Fahrzeuggeschwindigkeit lassen sich insbesondere ermitteln mittels eines Beschleunigungssensors, einer Drehzahlerfassung an einem unangetriebenen Rad, eines Raddrehzahlvergleichs oder einer wiederholt-kurzzeitigen Abschaltung eines Elektromotors, dessen Drehzahl dann repräsentativ für die Fahrzeuggeschwindigkeit ist.

Vorzugsweise ist die Zentralsteuerung so ausgebildet, daß sie über die Motorsteuerungen die beiden Elektromotoren auf für maximale Traktion günstigen, geringen Antriebsschlupf steuert, wobei das Steuerungskriterium vorzugsweise das Maximum der Traktionsleistung ist. Bei Untergründen, auf denen Antriebsräder leicht zu erheblichem Schlupf neigen, beispielsweise Schnee, Sand, weiches Gelände, wird nämlich die optimale Fahrzeugtraktion erreicht, wenn zwischen den Antriebsrädern und dem Untergrund bereits ein gewisser Schlupf besteht.

Bei der Antischlupfsteuerung können auch weitere, äußere Parameter berücksichtigt werden, insbesondere Information über den Einfederungszustand des Fahrzeugs oder Informationen über Längs- und Querbeschleunigung des Fahrzeugs.

Vorzugsweise ist die Zentralsteuerung so ausgebildet, daß sie zur Erzeugung eines Rechts/Links-Antriebsunterschieds auf Lenkungseinschlag und/oder Drehung des Fahrzeugs um seine Hochachse reagiert. Im erstgenannten Fall ist vorzugsweise ein Lenkungseinschlagsensor vorgesehen. Die von den Elektromotoren gelieferten Leistungen bzw. Drehzahlen bzw. Drehmomente werden so gesteuert, daß die Elektromotoren zur Drehbeschleunigung des Fahrzeugs um seine Hochachse bei Kurvenfahrt beitragen. Die hauptsächliche Situation für den zweitgenannten Fall sind Gierbewegungen oder Schleuderbewegungen des Fahrzeugs um seine Hochachse. Hier kann durch entsprechende, entgegengerichtete Drehmomentbeaufschlagung der Antriebsräder entgegengewirkt werden.

Nach einem weiteren Aspekt der Erfindung ist an die Zentralsteuerung mindestens ein externer Sensor angeschlossen. Vorzugsweise handelt es sich hierbei um einen Lenkungseinschlagsensor, um einen Abstandssensor zum Erfassen von anderen Fahrzeugen, denen sich das Fahrzeug nähert oder die sich dem Fahrzeug nähern, um einen Neigungssensor oder um eine lagestabile Kreiselplattform, vorzugsweise einen Laserkreisel, die lineare und/oder winkelmäßige Beschleunigungen des Fahrzeugs in allen oder den wesentlichsten Richtungen bzw. um alle oder die wesentlichsten Achsen erfaßt. Es ist außerdem möglich, in der Zentralsteuerung bestimmte Fahrprogramme gespeichert zu haben, insbesondere bestimmte Fahrzeugbeschleunigungsprogramme, ein oder mehrere Einparkprogramme für automatisches Einparken und dergleichen. Überhaupt können in der Zentralsteuerung andere Überfunktionen abgelegt sein. Die Fahrprogramme können unter dem Einfluß der in der Anmeldung beschriebenen, anderen Steuerungen stehen.

Generell ist es günstig, die gewichtigsten Fahrzeugkomponenten bevorzugt im Vorder- und Hinterende des Fahrzeugs anzuordnen, um das Hochachsenträgheitsmoment des Fahrzeugs zu vergrößern und damit das Fahrverhalten des Fahrzeugs zu verbessern.

Vorzugsweise ist mindestens ein für den Fahrer vorgesehener Befehlsgeber, insbesondere für Fahrzeugbeschleunigung bzw. Fahrzeuggeschwindigkeit und/oder für Fahrzeugverzögerung, an die Zentralsteuerung angeschlossen.

Vorzugsweise bilden die beiden Elektromotoren einen kombinierten Tandemmotor, der ein gemeinsames Stationärteil (vorzugsweise mit zwei Statorringen) und zwei Rotorteile aufweist. Das gemeinsame Stationärteil kann die Leistungs- und Informationsverkabelung sowie gegebenenfalls die Kühlmittelzuführung und Kühlmittelabführung enthalten. Außerdem können an dem Stationärteil Peripherteile der beiden Motorsteuerungen angeordnet sein, insbesondere Drehzahlerfassung, Drehzahldifferenzerfassung, Temperaturüberwachung und dergleichen.

Die Elektromotoren können jeweils mit dem zugeordneten Antriebsrad über eine Welle, insbesondere Gelenkwelle, verbunden sein oder können dem jeweiligen Antriebsrad räumlich eng unmittelbar zugeordnet sein, beispielsweise in Form eines radintegrierten Antriebsmotors.

Bei bestimmten Auslegungen ist es günstig und deshalb bevorzugt, zwischen dem jeweiligen Elektromotor und den jeweiligen Antriebsrad ein Untersetzungsgetriebe vorzusehen, weil dann der betreffende Elektromotor als schnell drehender Motor mit hoher Leistungskonzentration vorgesehen werden kann. Das Untersetzungsgetriebe kann mit dem Elektromotor oder mit dem betreffenden Antriebsrad eine integrierte Einheit bilden. Das Untersetzungsgetriebe kann ein Getriebe mit Fixuntersetzung oder ein mehrstufiges, schaltbares Untersetzungsgetriebe sein. In der Regel reicht hier ein Untersetzungsgetriebe mit zwei Stufen aus, z.B. eine Stufe mehr für Stadtfahrt oder Geländefahrt und die andere Stufe mehr für Überlandfahrt.

Vorzugsweise weist das Fahrzeug einen Verbrennungsmotor und mindestens einen von diesem antreibbaren Stromgenerator auf, damit der für die Elektromotoren erforderliche Strom im Fahrzeug erzeugt werden kann. Es ist aber auch möglich, mit einer anderen Stromquelle oder einem chemischen Stromspeicher zu arbeiten.

Vorzugsweise ist der Generator im wesentlichen baugleich mit einem Antriebs-Elektromotor, wobei eine Bewicklung mit gegenüber der Elektromotorauslegung abweichender Windungszahl pro Pol und/oder eine unterschiedliche Wicklungsverschaltung möglich ist. Da der Generator normalerweise auf Höchstleistung bei Höchstdrehzahl ausgelegt ist, langt ein mit einem Elektromotor im wesentlichen baugleicher Generator zur Versorgung mehrerer Elektromotoren. Gegebenenfalls können mehrere, vorzugsweise untereinander baugleiche, Generatoren an den Verbrennungsmotor angekoppelt sein.

Vorzugsweise ist der Generator an dem Verbrennungsmotor integriert. Diese Verbrennungsmotor/Generator-Einheit kann an praktisch beliebiger Stelle des Fahrzeugs, wo genügend Raum ist, angeordnet sein, da von dieser Einheit kein mechanischer Abtrieb erfolgt.

Vorzugsweise weist der Generator eine Separatwicklung zur Erzeugung von Strom für das Fahrzeugbordnetz auf. Eine Alternative besteht darin, daß an dem Generator oder dem von dem Generator gespeisten Stromkreis eine Stromabzweigung zur Versorgung des Fahrzeugbordnetzes vorgesehen ist, wobei vorzugsweise für die Erzeugung der Bordnetzspannung ein Transformator oder ein Tiefsetzwechselrichter vorgesehen ist. Vorzugsweise ist die Auslegung des Fahrzeugs nämlich so, daß der Generator für die Elektromotoren eine relativ hohe Spannung vorzugsweise im Bereich von 500 bis 1000 V liefert, während eine übliche Bordnetzspannung 12 V ist. Bei derart hohen Generatorspannungen sind die in den Elektromotoren fließenden Ströme angenehm niedrig.

Vorzugsweise ist der Generator so ausgebildet, daß er als Anlasser für den Verbrennungsmotor, also als Anlaß-Elektromotor, betreibbar ist. Es ist möglich, hierfür eine separate Anlasserwicklung im Generator vorzusehen. Es versteht sich, daß zum Betreiben des Anlassers normalerweise im Fahrzeug eine Stromquelle bzw. ein Speicher für elektrische Energie vorhanden ist. Dessen Spannungsniveau kann durch einen Transformator und/oder einen Hochsetzsteller auf ein für den Anlasser günstiges Spannungsniveau hochgesetzt sein. Es ist als günstig bevorzugt, den Generator so auszulegen, daß er den Verbrennungsmotor mit erheblich oberhalb der Leerlaufdrehzahl liegender Drehzahl anläßt, insbesondere mit einer mehr als 40% der Maximaldrehzahl des Verbrennungsmotors betragenden Anlaßdrehzahl. Dies sichert ein besonders leichtes Starten des Verbrennungsmotors.

Vorzugsweise sind die Elektromotoren zum Bremsen des Fahrzeugs auf Generatorbetrieb umschaltbar und ist mindestens ein Bremswiderstand zum Vernichten von Bremsenergie vorgesehen. Es kann auch vorgesehen sein, daß der beim Bremsen erzeugte Strom dem fahrzeugeigenen Stromspeicher zugeleitet wird, solange dieser aufnahmefähig ist.

Vorzugsweise sind die Elektromotoren und/oder der Generator dauermagnetisch erregte Maschinen, wobei die Dauermagnete hochkoerzitive Dauermagnete sind, beispielsweise aus einer Legierung mindestens eines Seltenerdelements mit Kobalt oder Eisen sowie ggf. mindestens einem weiteren Zusatz. Derartige Maschinen lassen sich mit besonders hoher Leistungsdichte bauen.

Vorzugsweise sind die Elektromotoren mit Gleichstrom zu speisende, elektronisch kommutierte Maschinen.

Vorzugsweise sind die Elektromotoren und/oder der Generator nach dem Prinzip der Magnetflußkonzentration gebaut. Magnetflußkonzentration bedeutet vorzugsweise, daß die Magnetflußdichte im Luftspalt größer ist als an der Magnetflußaustrittsfläche des betreffenden Dauermagneten.

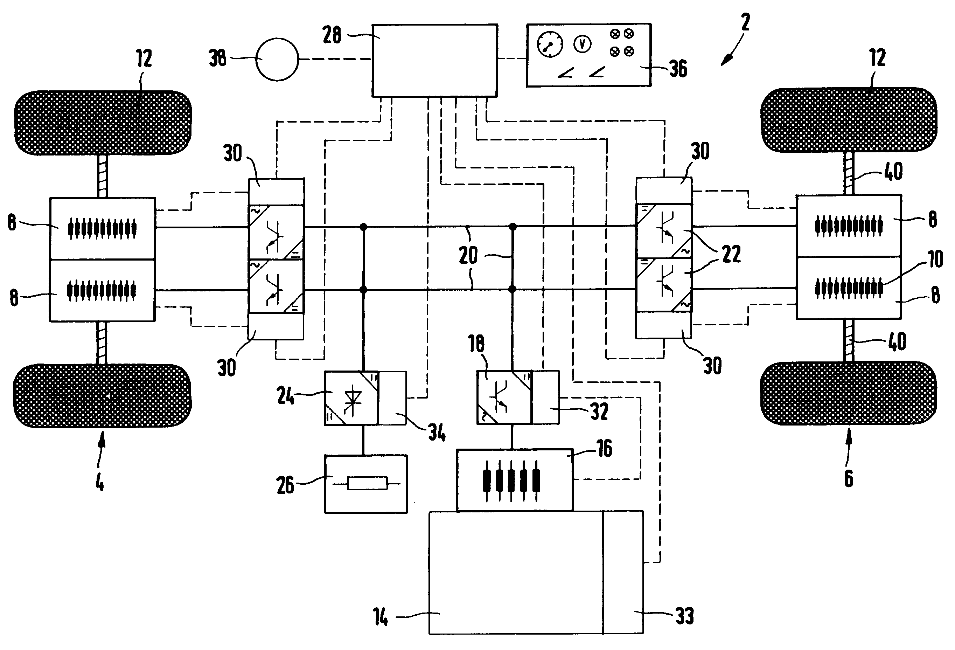

Die Erfindung und Ausgestaltungen der Erfindung werden nachfolgend anhand eines zeichnerisch dargestellten Ausführungsbeispiels noch näher erläutert. Die einzige Zeichnungsfigur zeigt ein stark schematisiertes, vierrädriges Straßenfahrzeug in Draufsicht und insbesondere die elektrischen Antriebs-, Stromerzeugungs- und Steuerungskomponenten des Fahrzeugs.

Sowohl an der Vorderachse 4 als auch an der Hinterachse 6 des Fahrzeugs 2 sind jeweils zwei Antriebs-Elektromotoren 8 vorgesehen. Die beiden Elektromotoren 8 einer Achse bilden einen Tandemmotor mit gemeinsamem Stationärteil. Innerhalb jedes Elektromotors sind die einzelnen Wicklungsspulen 10 schematisch angedeutet. Man erkennt, daß in dem gemeinsamen Stationärteil separate Wicklungsspulen 10 für jeden Einzelmotor 8 vorhanden sind. Der Rotor jedes Motors 8 ist mit Dauermagneten besetzt. Jeder Elektromotor 8 treibt ein zugeordnetes Antriebsrad 12.

Mit dem Bezugszeichen 14 ist ein Verbrennungsmotor bezeichnet. Dem Verbrennungsmotor 14 ist ein Generator 16 räumlich eng zugeordnet. Der im Generator 16 erzeugte Strom wird in einer Leistungselektronik 18 gleichgerichtet und von dort in einen Gleichspannungszwischenkreis 20 gespeist.

An den Gleichspannungszwischenkreis 20 sind die vier Elektromotoren 8 jeweils über eine Leistungselektronik in Form eines Stromstellers 22 angeschlossen. Jeder Stromsteller 22 führt dem zugeordneten Elektromotor 8 zeit- und vorzeichenrichtig Strompulse zu.

An den Gleichspannungszwischenkreis 20 ist ferner ein Bremssteller 24 angeschlossen, an den ein oder mehrere Bremswiderstände 26 angeschlossen sind.

Mit dem Bezugszeichen 28 ist ein Mikroprozessorsystem bezeichnet, das eine Zentralsteuerung des Fahrzeugs 2 darstellt. Die Zentralsteuerung 28 ist über Informationsleitungen mit den vier Motorsteuerungen 30 der vier Elektromotoren 8, mit einer der Leistungselektronik 18 zugeordneten Steuerung 32, mit einer dem Verbrennungsmotor 14 zugeordneten Steuerung 33 und mit einer dem Bremssteller 24 zugeordneten Bremssteuerung 34 verbunden. Die Steuerungen 32 und 33 bilden eine Stromerzeugungssteuerung. Außerdem sind mit der Zentralsteuerung 28 eine Bedienungs- und Anzeigeeinheit 36 sowie einer oder mehrere externe Sensoren 38 verbunden. Jede Motorsteuerung 30 ist mit dem zugeordneten Elektromotor durch eine Signalleitung verbunden. Die Steuerung 32 ist mit dem Generator 16 durch eine Signalleitung verbunden.

Für die angesprochene, elektronische Kommutierung jedes Elektromotors 8 erhält die betreffende Motorsteuerung 30 Signale von einem nicht dargestellten Drehstellungssensor, der die Drehstellung des betreffenden Rotors relativ zu dem betreffenden Stator laufend feststellt.

Jede Motorsteuerung 30 erhält laufend Information über die momentane Spannung, Stromstärke und Drehzahl und errechnet sich daraus die momentane Leistung und das momentane Drehmoment des zugeordneten Elektromotors 8, entweder von dem betreffenden Elektromotor 8 oder von dem betreffenden Stromsteller 22 her. Die Zentralsteuerung 28 verarbeitet diese Informationen von allen Elektromotoren 8 und berücksichtigt sie bei ihren Steuerbefehlen an die Motorsteuerungen 30 zur Erfüllung der weiter vorn angesprochenen Funktionen. Es ist möglich, die Motorsteuerungen 30 und/oder die Zentralsteuerung 28 so auszulegen, daß sie die in der Beschreibungseinleitung beschriebenen, weiteren Funktionen (Erfassung von Drehzahländerungen, Errechnung der Radantriebsleitung, Vortriebsermittlung etc.) leistet.

Die Stromerzeugungssteuerung 32, 33 erhält von der Zentralsteuerung 28 Befehle hinsichtlich der erforderlichen Stromerzeugung. Aufgrund dieser Befehle gibt die Stromerzeugungssteuerung 32, 33 Befehle an den gesteuerten Gleichrichter 18 in Form eines Vierquadrantenstellers, den Generator 16 und den Verbrennungsmotor 14. Die Stromerzeugungssteuerung 32,33 kann diese Komponenten so steuern, daß der Verbrennungsmotor 14 die weiter vorn beschriebenen Funktionen ausführt, insbesondere jeweils nahe dem verbrauchsoptimalen Punkt seines Kennfelds läuft.

Die Motorsteuerungen steuern den Sollzustand der Elektromotoren 8 hinsichtlich Leistung, Drehmoment und Drehzahl.

Die Zentralsteuerung 28 bewerkstelligt über die Motorsteuerungen 30 auch ein Umsteuern der Elektomotoren 8 auf Generatorbetrieb zum Verzögern des Fahrzeugs 2 und über die Bremssteuerung 34 die Vernichtung von Bremsenergie in dem oder den Bremswiderständen 26.

Die Elektromotoren 8, der Generator 16, die Motorsteller 22, der Gleichrichter 18, der Bremssteller 24 und die Zentralsteuerung 28 sind jeweils multipel aufgebaut. Dies bedeutet, daß diese Komponenten jeweils aus mehreren, für sich funktionstüchtigen, autarken Unterkomponenten bestehen, so daß auch bei Ausfall einzelner Unterkomponenten die Gesamtfunktion nicht wesentlich beeinträchtigt wird.

## Patentansprüche

1. Nichtschienengebundenes Fahrzeug mit folgenden Merkmalen:
(a) mindestens zwei Antriebs-Elektromotoren (8), von denen der eine zum Antrieb eines Antriebsrads (12) auf der linken Fahrzeugseite und der andere zum Antrieb eines Antriebsrads (12) auf der rechten Fahrzeugseite vorgesehen ist;
(b) jedem der beiden Elektromotoren (8) ist eine eigene Motorsteuerung (30) zum Vorgeben der momentanen Soll-Leistung und/oder der momentanen Soll-Drehzahl des betreffenden Elektromotors (8) zugeordnet;
(c) eine mit den Motorsteuerungen (30) verbundene, übergeordnete Zentralsteuerung (28), welche die beiden Elektromotoren (8) über die Motorsteuerungen (30) im Sinn einer Antriebsschlupfverhinderung und/oder einer Bremsblockierverhinderung und/oder eines fahrdynamisch günstigen Rechts/Links-Antriebsunterschieds steuert;
(d) wobei die Zentralsteuerung (28) und/oder die Motorsteuerungen (30) Informationen über die momentane elektrische Ist-Leistung und die momentane Ist-Drehzahl der beiden Elektromotoren (8) berücksichtigen.

2. Fahrzeug nach Anspruch 1, gekennzeichnet durch einen Verbrennungsmotor (14) und mindestens einen von diesem antreibbaren Stromgenerator (16).

3. Nichtschienengebundenes Fahrzeug mit folgenden Merkmalen:
(a) mindestens ein Antriebs-Elektromotor (8);
(b) ein Verbrennungsmotor (14) und ein von dem Verbrennungsmotor (14) antreibbarer Stromgenerator (16);
(c) dem Elektromotor (8) ist eine eigene Motorsteuerung (30) zum Vorgeben der momentanen Soll-Leistung und/oder der momentanen Soll-Drehzahl des Elektromotors (8) zugeordnet;
(d) der Verbrennungsmotor/Generator-Gruppe (14, 16) ist eine Stromerzeugungssteuerung (32, 33) zugeordnet; und
(e) eine mit den Motorsteuerungen (30) sowie der Stromerzeugungssteuerung (32) verbundene Zentralsteuerung (28), die unter Berücksichtigung der elektrischen Leistungsanforderung des Elektromotors (8) über die Stromerzeugungssteuerung (32) den Verbrennungsmotor (14) im Sinne eines geringen Kraftstoffverbrauchs und/oder geringer Emissionen und/oder hoher Leistungsabgabe steuert.

4. Fahrzeug nach Anspruch 3,
gekennzeichnet durch
mindestens zwei Antriebs-Elektromotoren (8), von denen der eine zum Antrieb eines Antriebsrads (12) auf der linken Fahrzeugseite und der andere zum Antrieb eines Antriebsrads (12) auf der rechten Fahrzeugseite vorgesehen ist, wobei jedem der beiden Elektromotoren (8) eine eigene Motorsteuerung (30) zugeordnet ist und die Zentralsteuerung (28) die elektrische Leistungsanforderung der beiden Elektromotoren (8) berücksichtigt.

5. Fahrzeug nach einem der Ansprüche 1, 2, 4,
dadurch gekennzeichnet,
daß die Zentralsteuerung (28) so ausgebildet ist, daß sie zur Antriebsschlupfverhinderung und/oder zur Bremsblockierverhinderung auf eine abnormal hohe oder niedrige Drehzahl mindestens eines der beiden Elektromotoren (8) und/oder auf eine abnormale Drehzahländerung mindestens eines der beiden Elektromotoren (8) und/oder auf einen abnormalen Drehzahlunterschied der beiden Elektromotoren (8) reagiert.

6. Fahrzeug nach einem der Ansprüche 1, 2, 4, 5,
dadurch gekennzeichnet,
daß die Zentralsteuerung (28) so ausgebildet ist, daß sie über die Motorsteuerungen (30) die beiden Elektromotoren (8) auf im wesentlichen gleiche Drehzahl oder auf Nichtüberschreiten einer vorgegebenen, maximalen Drehzahldifferenz steuert.

7. Fahrzeug nach einem der Ansprüche 1, 2, 4 bis 6,
dadurch gekennzeichnet,
daß die Zentralsteuerung (28) so ausgebildet ist, daß sie über die Motorsteuerungen (30) die beiden Elektromotoren (8) auf für maximale Traktion günstigen, geringen Antriebsschlupf steuert.

8. Fahrzeug nach einem der Ansprüche 1, 2, 4 bis 7,
dadurch gekennzeichnet,
daß die Zentralsteuerung (28) so ausgebildet ist, daß sie zur Erzeugung eines Rechts/Links-Antriebsunterschieds auf Lenkungseinschlag und/oder Drehung des Fahrzeugs (2) um seine Hochachse reagiert.

9. Fahrzeug nach einem der Ansprüche 1, 2, 4 bis 8,
dadurch gekennzeichnet,
daß die beiden Elektromotoren (8) einen kombinierten Tandemmotor bilden, der ein gemeinsames Stationärteil und zwei Rotorteile aufweist.

10. Fahrzeug nach Anspruch 9,
dadurch gekennzeichnet,
daß an dem Stationärteil Peripherteile der beiden Motorsteuerungen (30) angeordnet sind, vorzugsweise zur Drehzahlerfassung.

11. Fahrzeug nach einem der Ansprüche 1, 2, 4 bis 10,
dadurch gekennzeichnet,
daß der jeweilige Elektromotor (8) mit dem jeweiligen Antriebsrad (12) über eine Gelenkwelle (40) verbunden ist.

12. Fahrzeug nach einem der Ansprüche 1, 2, 4 bis 11,
dadurch gekennzeichnet,
daß der jeweilige Antriebsmotor (8) dem jeweiligen Antriebsrad (12) räumlich eng unmittelbar zugeordnet ist.

13. Fahrzeug nach einem der Ansprüche 1, 2, 4 bis 12,
dadurch gekennzeichnet,
daß der jeweilige Elektromotor (8) mit dem jeweiligen Antriebsrad (12) über ein Untersetzungsgetriebe mit Fixuntersetzung oder über ein mehrstufiges, schaltbares Untersetzungsgetriebe verbunden ist.

14. Fahrzeug nach Anspruch 13,
dadurch gekennzeichnet,
daß das Untersetzungsgetriebe an dem betreffenden Antriebsrad integriert angeordnet ist.

15. Fahrzeug nach einem der Ansprüche 2 bis 14,
dadurch gekennzeichnet,
daß der Generator (16) im wesentlichen baugleich mit einem Antriebs-Elektromotor (8) ist.

16. Fahrzeug nach einem der Ansprüche 2 bis 15,
dadurch gekennzeichnet,
daß der Generator (16) an dem Verbrennungsmotor (14) integriert ist.

17. Fahrzeug nach einem der Ansprüche 2 bis 16,
dadurch gekennzeichnet,
daß der Generator (16) eine Separatwicklung zur Erzeugung von Strom für das Fahrzeugbordnetz aufweist.

18. Fahrzeug nach einem der Ansprüche 2 bis 16,
dadurch gekennzeichnet,
daß an dem Generator (16) oder dem von dem Generator (16) gespeisten Stromkreis eine Stromabzweigung zur Versorgung des Fahrzeugbordnetzes vorgesehen ist, wobei vorzugsweise für die Erzeugung der Bordnetzspannung ein Transformator oder ein Tiefsetzwechselrichter vorgesehen ist.

19. Fahrzeug nach einem der Ansprüche 2 bis 18,
dadurch gekennzeichnet,
daß der Generator (16) so ausgebildet ist, daß er als Anlasser für den Verbrennungsmotor (14) betreibbar ist.

20. Fahrzeug nach Anspruch 19,
dadurch gekennzeichnet,
daß der Generator (16) so ausgelegt ist, daß er den Verbrennungsmotor (14) mit erheblich oberhalb der Leerlaufdrehzahl liegender Drehzahl anläßt.

21. Fahrzeug nach einem der Ansprüche 1, 2, 4 bis 20,
dadurch gekennzeichnet,
daß die Elektromotoren (8) zum Bremsen des Fahrzeugs (2) auf Generatorbetrieb umschaltbar sind und daß mindestens ein Bremswiderstand (26) zum Vernichten von Bremsenergie vorgesehen ist.

22. Fahrzeug nach einem der Ansprüche 1, 2, 4 bis 21,
dadurch gekennzeichnet,
daß die Elektromotoren (8) und/oder der Generator (16) dauermagnetisch erregte Maschinen sind, wobei die Dauermagnete hochkoerzitive Dauermagnete sind.

23. Fahrzeug nach einem der Ansprüche 1, 2, 4 bis 22,
dadurch gekennzeichnet,
daß die Elektromotoren (8) mit Gleichstrom zu speisende, elektronisch kommutierte Maschinen sind.

24. Fahrzeug nach einem der Ansprüche 1, 2, 4 bis 23,
dadurch gekennzeichnet,
daß die Elektromotoren (8) und/oder der Generator (16) nach dem Prinzip der Magnetflußkonzentration gebaut sind.

25. Fahrzeug nach einem der Ansprüche 1 bis 24,
dadurch gekennzeichnet,
daß mindestens ein externer Sensor (38) an die Zentralsteuerung angeschlossen ist, vorzugsweise ein Lenkungseinschlagsensor und/oder ein Abstandssensor und/oder ein Neigungssensor und/oder eine lagestabile Kreiselplattform.

26. Fahrzeug nach einem der Ansprüche 1 bis 25,
dadurch gekennzeichnet,
daß mindestens ein für den Fahrer vorgesehener Befehlsgeber (36) an die Zentralsteuerung (28) angeschlossen ist.

## Claims

1. A non-rail bound vehicle having the following features:
(a) at least two drive electromotors (8), the one thereof being provided for driving a driving wheel (12) on the left side of the vehicle and the other one thereof being provided for driving a driving wheel (12) on the right side of the vehicle;
(b) each of the two electromotors (8) has its own motor control (30) associated therewith for presetting the instantaneous nominal power and/or the instantaneous nominal speed of the respective electromotor (8);
(c) a superior central control (28) which is connected to the motor controls (30) and controls the two electromotors (8) via the motor controls (30) so as to prevent drive slip and/or brake locking and/or to provide a right/left drive differential that is favourable in terms of movement dynamics;
(d) with the central control (28) and/or the motor controls (30) taking into account information on the instantaneous actual electrical power and on the instantaneous actual speed of the two electromotors (8).

2. A vehicle according to claim 1,
characterized by an internal combustion engine (14) and at least one current generator (16) adapted to be driven by the latter.

3. A non-rail bound vehicle having the following features:
(a) at least one drive electromotor (8);
(b) an internal combustion engine (14) and a current generator (16) adapted to be driven by the internal combustion engine (14);
(c) the electromotor (8) has its own motor control (30) associated therewith for presetting the instantaneous nominal power and/or the instantaneous nominal speed of the electromotor (8);
(d) the internal combustion engine/generator group (14, 16) has a current generating control (32, 33) associated therewith; and
(e) a central control (28) which is connected both to the motor controls (30) and to the current generating control (32) and which, in consideration of the electrical power requirements of the electromotor (8), controls the internal combustion engine (14) via the current generating control (32) so as to achieve low fuel consumption and/or low emissions and/or high power output.

4. A vehicle according to claim 3,
characterized by at least two drive electromotors (8), the one thereof being provided for driving a driving wheel (12) on the left side of the vehicle and the other one being provided for driving a driving wheel (12) on the right side of the vehicle, each of the two electromotors (8) having its own motor control (30) associated therewith and the central control (28) taking into consideration the electrical power requirements of the two electromotors (8).

5. A vehicle according to any one of claim 1, 2, 4, characterized in that the central control (28) is designed such that, for drive slip prevention and/or for brake locking prevention, it is responsive to an abnormally high or low speed of at least one of the two electromotors (8) and/or to an abnormal speed change of at least one of the two electromotors (8) and/or to an abnormal speed differential between the two electromotors (8).

6. A vehicle according to any one of claims 1, 2, 4, 5,
characterized in that the central control (28) is designed such that it controls the two electromotors (8) via the motor controls (30) such that these have essentially the same speed or do not exceed a predetermined maximum speed differential.

7. A vehicle according to any one of claims 1, 2, 4 to 6,
characterized in that the central control (28) is designed so as to control the two electromotors (8) via the motor controls (30) so as to achieve low drive slip which is advantageous for maximum traction.

8. A vehicle according to any one of claimed 1, 2, 4 to 7,
characterized in that the central control (30) is designed so as to be responsive to the steering angle and/or rotation of the vehicle (2) about its vertical axis for generating a right/left drive differential.

9. A vehicle according to any one of claims 1, 2, 4 to 8,
characterized in that the two electromotors (8) constitute a combined tandem motor having a common stationary part and two rotor parts.

10. A vehicle according to claim 9,
characterized in that the stationary part has peripheral parts of the two motor controls (30) disposed thereon, preferably for speed detection.

11. A vehicle according to any one of claims 1, 2, 4 to 10,
characterized in that the respective electromotor (8) is connected to the respective driving wheel (12) via an articulated shaft (40).

12. A vehicle according to any one of claims 1, 2, 4 to 11,
characterized in that the respective drive motor (8) is directly associated with the respective driving wheel (12) in spatially close manner.

13. A vehicle according to any one of claims 1, 2, 4 to 12,
characterized in that the respective electromotor (8) is connected to the respective driving wheel (12) via a reduction gear system with fixed reduction ratio or via a multistage switchable reduction gear system.

14. A vehicle according to claim 13,
characterized in that the reduction gear system is disposed on the particular driving wheel in integrated manner.

15. A vehicle according to any one of claims 2 to 14, characterized in that the generator (16) has substantially the same construction as a drive electromotor (8).

16. A vehicle according to any one of claims 2 to 15, characterized in that the generator (16) is integrated on the internal combustion engine (14).

17. A vehicle according to any one of claims 2 to 16, characterized in that the generator (16) has a separate coil for generating current for the vehicle's onboard electrical system.

18. A vehicle according to any one of claims 2 to 16, characterized in that a current branch is provided at the generator (16) or the circuit fed by the generator (16) for the purpose of feeding the vehicle's onboard electrical system, with a transformer or a set-down inverter being preferably provided for producing the onboard supply voltage.

19. A vehicle according to any one of claims 2 to 18, characterized in that the generator (16) is designed so as to be operable as a starter for the internal combustion engine (14).

20. A vehicle according to claim 19,
characterized in that the generator (16) is designed such that it starts the internal combustion engine (14) with a speed that is considerably above the idling speed.

21. A vehicle according to any one of claims 1, 2, 4 to 20,
characterized in that the electromotors (8) are adapted to be switched over to generator operation for braking the vehicle (2), and that at least one braking resistor (26) is provided for destroying braking energy.

22. A vehicle according to any one of claims 1, 2, 4 to 21,
characterized in that the electromotors (8) and/or the generator (16) are machines excited by permanent magnets, with the permanent magnets being highly coercive permanent magnets.

23. A vehicle according to any one of claims 1, 2, 4 to 22,
characterized in that the electromotors (8) are electronically commutated machines to be fed with direct current.

24. A vehicle according to any one of claims 1, 2, 4 to 23,
characterized in that the electromotors (8) and/or the generator (16) are constructed in accordance with the principle of magnetic flux concentration.

25. A vehicle according to any one of claims 1 to 24, characterized in that the central control has at least one external sensor (38) connected thereto, preferably a steering angle sensor and/or a distance sensor and/or an inclination sensor and/or a positionally stable gyroplatform.

26. A vehicle according to any one of claims 1 to 25, characterized in that at least one command generator (36) provided for the driver is connected to the central control (28).

## Revendications

1. Véhicule non ferroviaire présentant les caractéristiques suivantes :
(a) au moins deux moteurs de propulsion électriques (8) dont l'un est prévu pour l'entraînement d'une roue motrice (12) située du côté gauche du véhicule et l'autre pour l'entraînement d'une roue motrice (12) située du côté droit du véhicule;
(b) à chacun des deux moteurs électriques (8) est affectée une commande de moteur individuelle (30) transmettant la puissance de consigne instantanée et/ou la vitesse de rotation de consigne instantanée du moteur électrique concerné (8);
(c) une commande centrale (28) reliée aux commandes de moteur (30) et hiérarchiquement supérieure à celles-ci, qui dirige les deux moteurs électriques (8) par l'intermédiaire des commandes de moteur (30) avec pour objectif d'empêcher le patinage à l'accélération et/ou d'empêcher le blocage des freins et/ou d'imposer une différence d'entraînement gauche/droite avantageuse du point de vue de la dynamique du véhicule;
(d) la commande centrale (28) et/ou les commandes de moteur (30) tenant compte d'informations concernant la puissance électrique effective instantanée et la vitesse de rotation effective instantanée des deux moteurs électriques (8).

2. Véhicule selon la revendication 1,
caractérisé par
un moteur à combustion (14) et au moins un générateur électrique (16) pouvant être entraîné par celui-ci.

3. Véhicule non ferroviaire présentant les caractéristiques suivantes :
(a) au moins un moteur de propulsion électrique (8);
(b) un moteur à combustion (14) et un générateur électrique (16) pouvant être entraîné par le moteur à combustion (14);
(c) une commande de moteur individuelle (30) est affectée au moteur électrique (8) pour transmettre la puissance de consigne instantanée et/ou la vitesse de rotation de consigne instantanée du moteur électrique (8);
(d) une commande de production de courant (32, 33) est affectée au groupe générateur/moteur à combustion (14, 16);
(e) une commande centrale (28) reliée aux commandes de moteur (30) ainsi qu'à la commande de production de courant (32) qui dirige, en tenant compte de la demande de puissance électrique du moteur électrique (8), par l'intermédiaire de la commande de production de courant (32), le moteur à combustion (14) avec pour objectif de réduire la consommation de carburant et/ou de réduire les émanations et/ou de fournir une puissance utile plus élevée.

4. Véhicule selon la revendication 1,
caractérisé par
deux moteurs de propulsion électriques (8) dont l'un est prévu pour l'entraînement d'une roue motrice (12) située du côté gauche du véhicule et l'autre pour l'entraînement d'une roue motrice (12) située du côté droit du véhicule, une commande de moteur individuelle (30) étant affectée à chacun des deux moteurs électriques (8) et la commande centrale (28) tenant compte de la demande de puissance électrique des deux moteurs électriques (8).

5. Véhicule selon l'une quelconque des revendications 1, 2, 4,
caractérisé en ce que
la commande centrale (28) est conçue de façon à réagir, pour empêcher le patinage à l'accélération et/ou pour empêcher le blocage des freins, à une vitesse de rotation anormalement élevée ou basse de l'un au moins des deux moteurs électriques (8) et/ou à une variation de vitesse de rotation anormale de l'un au moins des deux moteurs électriques (8) et/ou à une différence de vitesses de rotation anormale entre les deux moteurs électriques (8).

6. Véhicule selon l'une quelconque des revendications 1, 2, 4, 5,
caractérisé en ce que
la commande centrale (28) est conçue pour imposer par l'intermédiaire des commandes de moteur (30) aux deux moteurs électriques (8) d'avoir sensiblement la même vitesse de rotation ou de ne pas dépasser une différence de vitesses de rotation maximum prédéterminée.

7. Véhicule selon l'une quelconque des revendications 1, 2, 4 à 6,
caractérisé en ce que
la commande centrale (28) est conçue pour imposer aux deux moteurs électriques (8) par l'intermédiaire des commandes de moteur (30) un léger patinage à l'accélération avantageux pour obtenir une traction optimale.

8. Véhicule selon l'une quelconque des revendications 1, 2, 4 à 7,
caractérisé en ce que
la commande centrale (28) est conçue de façon à réagir à un braquage et/ou à une rotation du véhicule (2) autour de son axe vertical pour engendrer une différence d'entraînement gauche/droit.

9. Véhicule selon l'une quelconque des revendications 1, 2, 4 à 8,
caractérisé en ce que
les deux moteurs électriques (8) forment un moteur tandem combiné qui présente une partie de stator commune et deux parties de rotor.

10. Véhicule selon la revendication 9,
caractérisé en ce que
des éléments périphériques des deux commandes de moteur (30) sont disposés sur la partie de stator, de préférence pour relever la vitesse de rotation.

11. Véhicule selon l'une quelconque des revendications 1, 2, 4 à 10,
caractérisé en ce que
chacun des moteurs électriques (8) est relié à la roue motrice correspondante (12) par l'intermédiaire d'un arbre de transmission articulé (40).

12. Véhicule selon l'une quelconque des revendications 1, 2, 4à 11,
caractérisé en ce que
chacun des moteurs électriques (8) est disposé spatialement à proximité immédiate de la roue motrice correspondante (12).

13. Véhicule selon l'une quelconque des revendications 1, 2, 4 à 12,
caractérisé en ce que
chacun des moteurs électriques (8) est relié à la roue motrice correspondante (12) par l'intermédiaire d'un démultiplicateur à démultiplication fixe ou par l'intermédiaire d'un démultiplicateur embrayable à plusieurs vitesses.

14. Véhicule selon la revendication 13,
caractérisé en ce que
le démultiplicateur est intégré à la roue motrice correspondante.

15. Véhicule selon l'une quelconque des revendications 2 à 14, caractérisé en ce que
le générateur (16) est de construction similaire à celle d'un moteur de propulsion électrique (8).

16. Véhicule selon l'une quelconque des revendications 2 à 15, caractérisé en ce que
le générateur (16) est intégré au moteur à combustion (14).

17. Véhicule selon l'une quelconque des revendications 2 à 16, caractérisé en ce que
le générateur (16) présente un bobinage séparé pour générer le courant du réseau de bord du véhicule.

18. Véhicule selon l'une quelconque des revendications 2 à 16, caractérisé en ce que
une dérivation est prévue sur le générateur (16) ou sur le circuit alimenté par le générateur (16) pour alimenter le réseau de bord du véhicule, un transformateur ou un convertisseur continu-alternatif à basse tension de sortie étant de préférence prévu pour la génération de la tension d'alimentation du réseau de bord.

19. Véhicule selon l'une quelconque des revendications 2 à 18, caractérisé en ce que
le générateur (16) est conçu de façon à pouvoir servir de démarreur au moteur à combustion (14).

20. Véhicule selon la revendication 19,
caractérisé en ce que
le générateur (16) est dimensionné pour faire démarrer le moteur à combustion (14) avec une vitesse de rotation considérablement supérieure à la vitesse de rotation de ralenti.

21. Véhicule selon l'une quelconque des revendications 1, 2, 4 à 20,
caractérisé en ce que
les moteurs électriques (8) peuvent être inversés pour fonctionner en générateur pour freiner le véhicule (2) et en ce qu'il y a au moins une résistance de freinage (26) pour dissiper l'énergie de freinage.

22. Véhicule selon l'une quelconque des revendications 1, 2, 4 à 21,
caractérisé en ce que
les moteurs électriques (8) et/ou le générateur (16) sont des machines à excitation magnétique permanente, les aimants permanents étant des aimants permanents fortement coercitifs.

23. Véhicule selon l'une quelconque des revendications 1, 2, 4 à 22,
caractérisé en ce que
les moteurs électriques (8) sont des machines à alimentation continue à commutation électronique.

24. Véhicule selon l'une quelconque des revendications 1, 2, 4 à 23,
caractérisé en ce que
les moteurs électriques (8) et/ou le générateur (16) sont construits suivant le principe de la concentration de flux magnétique.

25. Véhicule selon l'une quelconque des revendications 1 à 24, caractérisé en ce que
au moins un capteur externe (38) est relié à la commande centrale, de préférence un capteur de braquage et/ou un capteur de distance et/ou un capteur d'inclinaison et/ou une plateforme gyroscopique maintenue en position.

26. Véhicule selon l'une quelconque des revendications 1 à 25, caractérisé en ce que
au moins un émetteur d'ordres (36) prévu pour le conducteur est raccordé à la commande centrale (28).
